# EUROPEAN PATENT SPECIFICATION

(11) **EP 2 975 905 B1**
(45) Date of publication and mention of the grant of the patent: **08.03.2017**
(21) Application number: 15176846.2
(22) Date of filing: 15.07.2015
(51) Int. Cl.: H04W 88/06

(54) **AUDIO AND DATA CONNECTION DEVICE FOR COMMUNICATION SYSTEMS OPERATING WITH DIFFERENT STANDARDS**
AUDIO- UND DATEN ANSCHLUSSVORRICHTUNG FÜR DATENÜBERTRAGUNGSSYSTEME MIT UNTERSCHIEDLICHEN STANDARDS.
DISPOSITIF AUDIO DE CONNEXION DE DONNÉES POUR DES SYSTÈMES DE COMMUNICATION FONCTIONNANT AVEC DES NORMES DIFFÉRENTES.

(30) Priority: 18.07.2014 IT RM20140400
(43) Date of publication of application: 20.01.2016
(73) Proprietor: Methodos Engineering S.r.l., 00144 Roma (IT)
(72) Inventor: DE PAOLIS, Giuseppe, 00144 Roma (IT)
(74) Representative: Leone, Mario

(56) References cited:
- CN-U- 201 893 943
- GB-A- 2 505 000
- US-A1- 2009 239 527

## Description

The present invention has as subject a connection device allowing the bidirectional passage of an audio flow and a data flow between two communication systems operating according to different standards, such as for example a professional mobile device operating according to the TETRA standard and a cellular device of advanced generation, operating based upon the cellular phone standards and data transmission (UMTS-HSDPA^{®}, 4G-LTE^{®} etc.).

TETRA^{®} (*TErrestrial Trunked RAdio,* originally *trans European trunked radio)* standard is a radio wave communication standard for professional use, with vehicular and portable systems, mainly used by security and military forces and by emergency services apart from the civil private services.

TETRA is a communication standard of audio-digital type issued by ETSI (*European Telecommunications Standards Institute*), the first version thereof was published in 1995, recommended by the *European Radio Communications Committee* (ERC).

The digital professional mobile systems currently available on the market, in particular those with TETRA standard, have dedicated terminals with very limited use and application capability features, even if adequate to such standard.

From the technological point of view, such limitations are structural to the systems themselves and are mainly due to the development platforms used by the greater manufacturers of digital mobile terminals, which generally have:
- proprietary operating systems wholly closed from the point of the application development of third parties;
- hardware architecture based upon microprocessors with poor computational capabilities and limited possibilities of integrating with accessories and/or devices based upon integrated chips;
- user interface solutions (display, keyboards, connectivity, accessories) structured for guaranteeing the simple communication functions (voice calling, messages, data transmission) to the disadvantage of the implementation of applications with high added value.

However, the terminals available on the market today are solid, reliable, resistant; they are perceived by the reference users as wholly similar to old devices of analogic type with an evident limitation in the possible technological development thereof.

At the same time, such users are more and more attracted by the more and more availability on the market of advanced platforms (touchscreen, development environments, open libraries, bluetooth^{®} connectivity and standard Wi-fi^{®}) constituted by the modern *smartphone.* Furthermore, even the current professional mobile digital networks of TETRA type have seen an increase in their own operating flexibility and make available to end users more and more sophisticated voice services and data with added value, only partially exploitable with the terminals made available on the market.

The result is a real technological impasse wherein the professional mobile users hunger for applications with added value which see available in consumer environment and which, due to safety and reliability reasons, would like to be repeated in its own private networks, applications which could be supported by the available more and more powerful infrastructures, which guarantee voice services and advanced data, able to be further used at application level.

Furthermore, the current terminals, even if inadequate from the application point of view, paradoxically have comparable, if not higher, costs to those of the consumer devices which the users, outside the strictly professional environment, use daily with applications with added value.

The International application Nr. WO 2014/027174 A1 describes a terminal useful to direct calls received by a cellular phone connected to a public cellular network to a private network of TETRA type and viceversa, but it does not allow transferring all complex functions of a *smartphone* to the TETRA networks to be able to be used instead of a tetra terminal.

The technical problem underlying the present invention is to provide an audio connection device and data between communication systems operating with different standards allowing to obviate the drawback mentioned with reference to the known art.

The solution idea to this problem is constituted then by the implementation of a hardware and software integrated platform allowing to implement a real convergence between the consumer terminals with high application value, then the *smartphones* which can be found easily on the market and already used outside the TETRA standard by the same operators, and the professional mobile one with high safety and reliability rate, so as to make available, for example in Android^{®}/Windows^{®}/iOS^{®} environment a specific interface which will allow the consumer developers to use the voice services and data made available by the TETRA networks in its own applications.

Such problem is solved by a connection device as defined by the enclosed claim 1.

The main advantage of the connection device according to the present invention lies in allowing to repeat all functions of a professional mobile terminal, for example operating according to the TETRA standard, in an advanced cellular device.

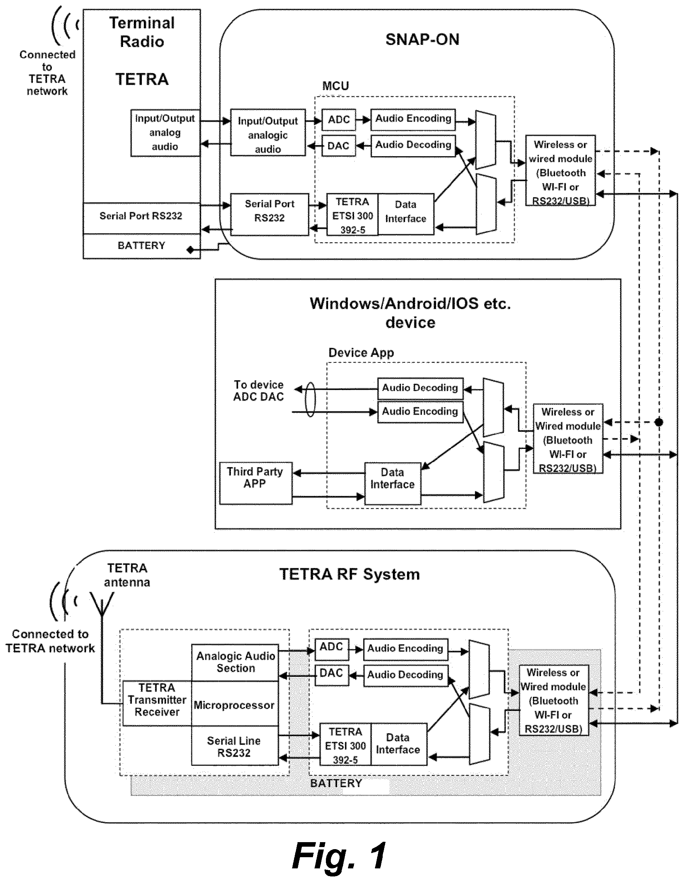

The present invention will be described hereinafter according to some preferred embodiment examples thereof, provided by way of example and not for limitative purpose by referring to the enclosed drawings wherein the single figure (figure 1) illustrates schematically a connection device according to the invention in the *snap-on* versions, with *wireless* or wire connection, and integrated.

By referring to the enclosed figure, the connection device according to the invention will be described by referring to a first terminal operating according to the TETRA standard and a second terminal constituted by a cellular device of last generation, operating according to the last cellular phone standards. Substantially it is constituted by the following constitutive elements:
- an integration and interface element, apt to be connected to a professional mobile terminal, for example a terminal operating according to the TETRA standard, which can be connected by means of digital radio connections, for example Bluetooth^{®}, Wi-fi^{®}, or by means of a cable to an advanced cellular communication device, designated as *Device* in figure, in particular a *smartphone* operating in Android^{®}/Windows^{®}/iOS^{®} environment with the TETRA networks; and
- an application substrate, hereinafter also application layer, allowing to decode an analogic audio flow and a data flow coming from said professional mobile terminal in analogous flows available in the environment of the advanced cellular communication device.

The integration and interface element is designates as *Snap On* in figure, being able to connect physically to the tetra terminal at the serial port thereof and a the audio output thereof.

The connection device then allows to connect to consumer systems the TETRA terminals existing on the market. From the logic point of view, the integration and interface element comprises the following sub-systems.

The first one of such sub-systems is a system for connecting to the *Peripheral Equipment Interface* (PEI) of the TETRA terminal; this interface, defined by the ETSI 300 392-5 standard, makes available all AT controls necessary to use the TETRA services. Such controls have to be sent and received, towards and from, the TETRA terminal, and this is possible through the physical interface made available by the device. The PEI connection system exchanges such controls and communicates them physically to the TETRA terminal for example according to the RS232 serial standard, usually existing on the terminal. Furthermore, it is fed by the battery of the terminal itself, without the help of outer devices.

The second sub-system is a system connecting to the voice interface of the TETRA terminal, which processes the audio-voice signal generated by the microphone and by the loud-speakers of the same terminal. The *Snap On* integration and interface element is physically connected to the audio connector of analogic input/output of the TETRA terminal. The output audio (*speaker out*) is digitalized and compressed, preventively passing through the analogic-digital converter (ADC) of the microcontroller. Subsequently, it is multiplied by a MUX multiplexer with possible controls or data processed by the microcontroller. This produces a single flow containing audio packages and data. Such flow then is sent, for example through a Bluetooth serial emulation, or on the Wi-Fi socket or through the serial port by cable, as output towards the cellular device connected thereto. The application substrate ad hoc, installed in the device, will attend demultiplexing (DEMUX) of audio and data, by decoding them and making them available to applications of third parties. In particular, the audio flow is subjected to the suitable decoding and decompression, by producing reproducible audio with phone quality levels by the device.

The flow input to the integration and interface element coming from the cellular device, in turn transmitted on the serial emulation, socket or cable, in specular way, is the result of the audio and data multiplexing which has taken place inside the application substrate. Such flow is demultiplied (DEMUX) in the integration and interface element so as to obtain two flows: a data flow and an audio flow, the latter requesting a digital-analogic conversion (DAC) before being sent to the analogic audio input of the terminal (*mic in*)*.*

The connection device further comprises a system for processing the controls for activating the several types of TETRA services: the management of the AT TETRA PEI (ETSI 300 392-5) controls is assigned to a *firmware* implemented in the integration and interface element. The application substrate dialogues with the integration and interface element according to an ad hoc communication mechanism, which makes transparent the management of the TETRA PEI controls existing in the *firmware.*

When a request by an application of third parties is generated, the application substrate translates the request into the relative controls for the communication with the integration and interface element. These will be sent, once multiplied with the audio data, by means of Bluetooth serial emulation, Wi-fi or serial socket by cable, to the integration and interface element which, after demultiplexing, will translate them into TETRA PEI standard AT controls, to be sent to the RS232 serial interface of the TETRA terminal.

Afterwards, the TETRA terminal replies to the integration and interface element with the request result still structured according to the TETRA PEI standard. This will translate the result in reply controls compatible with the application substrate and, by multiplexing them with the audio data, it will forward them back to the cellular device, by serial emulation, socket or to the serial by cable. The application substrate will convert everything into a result, which could be used by the application.

Already mentioned previously, the connection device at last comprises interfaces of wireless digital connectivity system (for example Bluetooth^{®} and/or Wi-fi^{®}) and/or by cable towards the *consumer* cellular device: in this way the integration and interface element is able to connect to any compatible outer cellular device.

In case of using a serial emulation according to the Bluetooth^{®} standard, the integration and interface element plays the server role and makes available to the client outer cellular devices only the SPP (*Serial Port Profile*) profile defined in the Bluetooth standard for emulating a RS232 serial connection between devices.

In a first phase, as provided by the standard, the coupling procedure is performed upon the client request; if this procedure, and the connection phase, are successful, a RFCOMM session is opened and then a bidirectional serial data connection of point-to-point type is established. Inside the *stack* Bluetooth, the *Baseband* connection which is established by the device is of ACL (Asynchronous Connection Less) type, which provides the re-transmission of the packages, by making strong the communication of data and controls.

In case of using the WiFi^{®}, the integration and interface element (server) exposes a socket, and then a specific IP address and a port number, to the outer cellular devices (client). If the Wi-fi connection procedure requested by a client is successful, a connection on the socket exposed by the integration and interface element is established. From that moment on, both the integration and interface element and the application substrate existing on the cellular device will attend to serialize data and audio of the input and output flows, during communication.

In case of using the cable, a RS232 serial connection is established between the integration and interface element and the cellular device.

What described above in relation to an integration and interface element can be repeated, according to a different embodiment version of the invention, in an integrated system, that is in a single apparatus, wherein the connection device according to the invention, designated as a whole with MCU, is coupled to a board operating according to the TETRA standard (*mainboard TETRA*) and it puts it into communication with an advanced cellular device, according to the same previously described modes.

In this version, it comprises a RF system with TETRA standard (*mainboard TETRA*), completed with battery and antenna: the system provides a board for interfacing to the network, connected to an compatible with the TETRA frequency, a battery with the relative power supply module.

A wireless WiFi^{®} and Bluetooth^{®} interface module (MCU) is connected to the above-described mainboard, by means of a RS232 serial line.

The mainboard is equipped with the related digital receiver/transmitter, microprocessor able to process and manage the digital signals and the protocol stack of the TETRA digital communication standard. This board is equipped with audio analogic input/output and RS232 serial line thereto the module containing the MCU is connected. The latter is responsible for processing the data and audio signals generated by (or to be sent to) the mainboard and to adapt them to the transportation on the WiFi^{®} connections, Bluetooth^{®} or serial by cable, according to an ad hoc communication mechanism, selected for the interaction with the application substrate installed on the outer devices. All components and modules of the system are fed by the battery.

The MCU module is structured and functions exactly like the corresponding portion of previously described integration and interface element.

The above-described application substrate makes possible the real usability of the voice and data services made available by the mobile networks in the application environment typical of the most advanced cellular devices of last generation.

It is constituted by specific applications in the different operating environments (Android^{®}/Windows^{®}/ iOS^{®}/MAC^{®}) which on one side interface with the integration and interface element for implementing the several functions provided in the platform and on the other side they expose to outer applications specific interfaces for:
- installing/receiving individual and TETRA group voice calls;
- making use of the advanced supplementary services of the TETRA networks (CLIP, CLIR, Priority, Late Entry, etc.);
- sending/receiving TETRA advanced messages (Status Messages, SDS, text messages)
- managing TETRA advanced functions (Call out, Priority Scanning, Broadcast Calls, Emergency Calls, radiolocalization via GPS, fleet management, ambiance listening, etc);
- managing the TETRA safety functions (over-the-air programming, authentication, encryption, etc);
and so on.

The application substrate is implemented under the form of service in background, activated and which can be configured by means of suitable control panel: by way of example such service exposes towards third applications the following interface types:
**Android^{®}:** the operating system Android provides a communication mechanism between the software modules installed on the device and/or the operating system, called Intent. This is used to perform signallings related to conditioned and unconditioned system events, or for the exchange of information on events or data between the applications.

The application substrate is able to receive and send Intents from and towards the operating system or applications of third parties. In order to make that an application can interact with the Service it is necessary that this provides a mechanism for sending/receiving the Intents defined in the Service (implementable with an Intent Filter). All Intents supported and enabled by the respective *Service,* based upon the specific *licensing* procedures, are made available for the developers. The service has a filter receiving the Intents for the exclusive reception of only accepted or supported events.

**Windows^{®}/iOS^{®}:** the application substrate exposes a socket at application level usable for the communication from and towards software of higher application layer. In particular, it implements a filter for receiving the requests from applications of third parties, and it is able to emit events, information and data towards thereto. All events supported as input and output from the application substrate are made available for the developers.

In this way, possible applications of third parties can use the following services:
**Passage between TMO and DMO modes:** it is possible using the TETRA terminals in TMO or DMO modes. The TMO mode (Trunking MOde) exploits the base radio stations and the TETRA infrastructure to carry out the services made available by the network; the DMO mode (Direct MOde), instead, consists in the direct connection between two or more TETRA terminals without the help of the infrastructure, therefore only some TETRA services are made available. The DMO mode exploits one single radio carrier for the communication (one for each group), therefore it is possible to transmit or receive only alternatively. The TMO mode, instead, exploits a channel for the transmission and one for the reception, therefore the full-duplex communications are made available and both users can transmit and receive contemporarily.

**Individual call:** it is possible performing full-duplex (both users can speak simultaneously) or half-duplex (only one user at a time can speak) point-to-point individual calls. It is possible performing full-duplex calls only in *hook signalling* mode (once established the connection, the user under transmission has to wait for the acceptance by the receiving user to start speaking), and it is possible performing half-duplex calls in *hook signalling* mode or in direct mode (once established the connection, the user under transmission has not to wait for any acceptance by the receiving user to start speaking). It is possible establishing if the communication has or has not to take place in *end-to-end* encrypted way (if provided by the infrastructure). The half-duplex or full-duplex modes, the *direct* or *hook signalling* modes, as well as the possible *end-to-end* encryption, are selected during establishment on the terminal side. Furthermore, still during establishment, it is possible establishing (if provided by the infrastructure) the call priority level and the possible pre-emption right, by means thereof some types of calls can close other on-going communications. The terminal which receives an input call is able to identify all just described modes therewith the communication is going to take place.

Based upon the rights established in the SwMI database, a user can perform or receive individual calls. The call can be started by means of inserting the user number (ISSI - *Individual Short Subscriber Identity*), or by selecting a user from the telephone book stored in the apparatus.

If the on-going call is of full-duplex type, it can be terminated by one of the two users, or by the infrastructure, which can interrupt the communication if a maximum time (from 0 to 60 min) established in the SwMI (if set during configuration) is overcome. In this case the users receive the report that the maximum duration time has expired.

A half-duplex call can be terminated by one of the two users, or by the infrastructure, which can interrupt the communication if a maximum time (from 0 to 60 min) established in the SwMI (if set during configuration), or in case none of the two users, within a time period defined in the SwMI, requests the permission to speak. In this case the users receive the report that the maximum duration time has expired.

Generally (both for full and half-duplex calls) the report of a call closure together with the closure reason is always received.

Additional supplementary services related to the individual calls are: call priority (*Queueing Priority -* it describes the priority for accessing the network resources; the access to the resource is guaranteed to the call with the highest priority level existing in the queue including all establishment requests), identification of the user under transmission (*Talking Party Identification -* the user under transmission sends his/her ID to the called users), identification of the calling user (*Calling Line Identification Presentation -* the receiving user receives the id of the user under transmission and he/she is able to identify him/her).

**Group calls:** it is possible performing point-to-multipoint half-duplex group calls in *direct signalling* mode (once established the connection the user under transmission has not to wait for any acceptance by the receiving users to start speaking, and one user at a time is authorized to speak). It is possible establishing if the communication has or has not to take place in *end-to-end* encrypted mode (if provided by the infrastructure). The possible *end-to-end* encryption, the call priority level and the possible pre-emption right, by means thereof some types of calls can close other on-going communications, are selected during establishment (if provided by the infrastructure). The terminals receiving an input group call are able to identify all just described modes, therewith the communication has to take place.

The groups are identified by a number (GSSI - *Group Short Subscriber Identity*). When a use selects a given group, the network implements the process of affiliating the user to the group itself and, in the positive case, it stores in the infrastructure the affiliation of such user to that group. All users selecting a certain conversation group could receive the calls performed by anyone of the users, provided that, in turn, they have selected that group. The user starting the group call will have to release the direct call to allow other users to communicate, in turn. The system at this point will give the authorization to speak to another component of the group. In case several users request contemporarily the authorization to speak, the system queues the requests in a waiting list so that only one of the components at at time can speak. The users are inserted in this queue according to the user priority in case defined at the infrastructure level, until reaching the possibility of authorizing a user to speak by interrupting the communication of other components of the group (*preemption*). The system allows defining static groups (*Talkgroup*) inside the infrastructure by means of applications for managing the Groups and pre-configured inside the terminal apparatuses by means of systems for programming the terminals (CPS). A group calling can be interrupted by the user which has started it, or by intervention of the system (in case there are not communications for a time interval defined in the system, or the group call maximum time defined in the system has been overcome, or still if the resources are occupied by an emergency call). All users of the group receive the call closing event with the closing reason.

Even during the reception of a group call, the user can move to another group by interrupting on its own terminal the reception of the on-going communication. Furthermore, the *late-entry* functionality is provided, allowing a user moving from a group to another one, to come after and receive a possible communication which was already on-going.

For each user it is possible defining at the system level the enable to perform or not group calls, as well as the priority for accessing the resources. For each group it is possible defining at the system level the list of the sites whereon the call can be implemented, as well as the priority for accessing the resources. Other services are: identification of the user under transmission (*Talking Party Identification -* the user under transmission sends his/her ID to the called users), identification of the calling user (*Calling Line Identification Presentation -* the receiving user receives the id of the user under transmission and of the associated group, and it is able to identify them).

**Emergency calls:** the emergency calls are sent with the maximum available priority to a single predefinable address or to a group address. When a user performs an emergency call, if there are no free channels, an on-going call with lower priority is automatically interrupted and the resources needed to establish the emergency call are allocated. The receiving terminal(s) are able to identify that the type of input call is of emergency type.

**Sending SDS messages:** it is possible sending brief messages up to 140 characters (SDS of type 4) to a single user or to a group. Before sending, it is possible defining the priority for accessing the resources, the possible *end-to-end* encryption, the request for the occurred reception and/or send of the message, the pre-emption right and the possible status of "emergency SDS" (all parameters which have to be predefined and supported by the infrastructure). The terminal or group thereto the message is sent are able to identify the sender and the just-described sending modes.

**Sending status messages:** it is possible sending quick messages predefined upon the system configuration, and linked to the user status (ex.: "waiting", "occupied", etc..). Such messages are identified by a univocal code. Before sending, it is possible defining the priority for accessing the resources, the possible *end-to-end* encryption, the request for the occurred reception and/or sending of the message, the pre-emption right (all parameters which have to be predefined and supported by the infrastructure). The terminal or group thereto the message is sent are able to identify the sender and the just-described sending modes.

**Conversation groups:** it is possible selecting the affiliation group and defining the scanning lists (and possibly activating the related function), receiving the report of the affiliation group exchange, or consulting the conversation groups preconfigured on the TETRA terminal.

**Management and modification of the telephone book:** the single elements in the telephone book are represented by a telephone book index, an individual number and an alphanumerical alias. It is possible consulting, adding, removing or modifying the single elements present in the telephone book.

**GPS localization:** if in the TETRA device the GPS functionality is enabled, it is possible questioning the terminal to know the position.

**Packet Data:** it is possible establishing connections of Packet Data type for exchanging files and data between the terminals recorded to the network. This involves a terminal status exchange which at this point will not respond anymore to the TETRA controls, unless the connection is terminated. In this mode the whole network functions like a IP network, and the protocols defined by the IPv4 standard are made available.

**Network status check:** it is possible verifying the status of connection to the network, location area, MNI and the relative performance parameters (BER and RSSI) of the cell thereto one is registered, as well as all broadcast parameters which the base station emits related to its own status and the services it supports: compulsory or not recording of the terminals to the cell; compulsory or not de-recording; presence or absence in the cell of the function for managing the priority; support or not of the migration function; support or not of the voice calls; support or not of the circuit switching; support or not of the encryption of the air interface; safety class of the cell (clear, SCK, DCK/CCK). It is further possible to have information about the adjacent ones to the serving cell thereto the terminal is recorded on the carrier frequency, location area, RSSI, Cx value and number of cells.

**Check and modification of the terminal parameters:** it is possible questioning the terminal to know the model, trademark, serial, battery charge level, firmware version, or to know the list of the fixed, static, dynamic identities of the individual numbers or of the conversation groups existing in the terminal, as well as the output audio volume and the information about tones used in the terminal and in case modifying them. It is possible requesting, resetting to default settings, or setting the operation features of the PEI serial interface (baud rate, flow check, echo), as well as restarting or switching-off the terminal.

Summing up, the qualifying and new aspect of the above-described connection device is given by the processing and multiplexing functions of the voice, data and check components to be exchanged between the two systems (consumer terminal like *smartphone* and PMR/TETRA terminal).

Such functions allow managing at the application level all PMR/TETRA services (Voice Calls, Messages, Data Transmission, Terminal Check, Safety) by means of the operating system of the consumer terminal.

Differently from what it is known from the state of art, see WO 2014/027174 A1, this feature does not prefigure a simple interconnection between devices operating on different networks (PMR vs. cellular networks), but a real exportation and integration of the PMR services on consumer terminals. The user then could use TETRA terminal as a wireless or snap-on extension of his/her own consumer terminal, by keeping graphic interface, operating system and application capability of the environment (Android, iOS, Windows, etc.) which he/she prefers and which he/she gets used to.

The processing and multiplexing of the voice, data and PMR/TETRA check components is implemented:
- PMR/TETRA terminal side, by the connection device including:
   ∘ a component for processing the audio of the TETRA terminal by means of sampling and digitalizing the obtained analogic signals of the audio interface of the terminal itself;
   ∘ a system for processing the controls for activating the various types of the TETRA services through AT TETRA PEI controls (ETSI 300 392-5).

The audio processing component and the system for processing the controls generate a univocal and multiplied data flow to be sent/receive towards/from the consumer terminal.
- consumer terminal side, from the application substrate constituted by ad hoc SW services in the different operating environments (Android^{®}/Windows^{®}/ iOS^{®}/MAC^{®}) which:
   ∘ interface with the integration and interface element for processing and demultiplexing the voice/data/check integrated flow;
   ∘ expose suitable libraries and interfaces for activating the various functions provided in the platform in the consumer operating environments (Android, iOS, Windows etc.).

The idea of multiplexing voice/data/check in a single flow exchange between the two terminals make the platform easily adaptable:
- to the different types of PMR terminals,
- to the different operating environments of the consumer terminals,
- to the different transmission means between the two terminals (wireless, wired, Wi-fi, Bluetooth, etc.)

Upon varying one of the above-mentioned components, at application level one will have to implement only one local adaptation of the transmission and processing systems, by keeping for all other components the same implementation architecture, which indeed is based upon an univocal voice/data/check flows not varying with respect to the terminal platforms and to the transmission means.

To the above-described connection device a person skilled in the art, with the purpose of satisfying additional and contingent needs, could introduce several additional modifications and variants, all however within the protective scope of the present invention, as defined by the enclosed claims.

## Claims

1. A connection device allowing the bidirectional passage of an audio flow and a data flow between two communication systems operating according to different standards: a first **TETRA** mobile terminal **including a PEI** (Peripheral **Equipment Interface)** and a second terminal operating based upon cellular phone standards, comprising:
• an integration and interface element, apt to be connected to or to integrate the first **TETRA** mobile terminal; and
• an application substrate decoding an analogic audio flow and a data flow coming from said **first TETRA** mobile terminal in analogous flows available in the environment of **said second terminal,**
wherein said integration and interface element comprises:
• a system for connecting the PEI of the first TETRA terminal **to said second terminal through a serial connection, whereby all** the AT controls necessary to use the services **are made available;**
• a system for connecting the voice interface of the first TETRA terminal, processing the audio-voice signal produced by the microphone and by the loudspeakers of the first TETRA terminal, **to said second terminal through a serial connection,** wherein the output audio signal is digitalized and is multiplied by a multiplexer (MUX) with possible controls or data processed by a microcontroller, and wherein a **single** inlet data flow is demultiplied (DEMUX) so as to obtain two flows: a data flow and an audio flow;
• a system for processing controls for activating services through a *firmware* implemented in said integration and interface element, translating the request by an application of third parties into the related controls for communicating with the integration and interface element through a multiplexing and, in the opposite route, a demultiplexing;
• one or more interfaces of wireless and/or wired digital connection system towards said **second** cellular device **achieving said serial connection.**

2. The connection device according to claim 1, wherein the application substrate comprises one or more applications in the operational environment of the second terminal operating based upon cellular phone standards (Android^{®}/Windows^{®}/ iOS^{®}/MAC®) to make usable in such environment the voice and data services of the first professional mobile terminal.

3. The connection device according to claim 1, wherein the device is connected to an existing professional mobile terminal operating according to the TETRA standard.

4. The connection device according to claim 1, wherein the device incorporates a professional mobile terminal operating according to the TETRA standard (TETRA mainboard).

5. The connection device according to claim 2 and according to one of claims 3 or 4, wherein said application substrate implements the various functions provided in a TETRA platform and it exposes to outer applications specific interfaces for:
• establishing/receiving TETRA individual and group voice calls;
• using the advanced supplementary services of TETRA (CLIP, CLIR, Priority, Late Entry, etc.) networks;
• sending/receiving advanced TETRA messages (Status Messages, SDS, text messages)
• handling advanced TETRA functions (Call out, Priority Scanning, Broadcast Calls, Emergency Calls, radiolocation via GPS, fleet management, ambiance listening, etc); and
• handling TETRA (over-the-air programming, authentication, encryption) safety functions.

## Patentansprüche

1. Eine Verbindungsvorrichtung, die die bidirektionale Übertragung eines Audiostroms und eines Datenstroms zwischen zwei Kommunikationssystemen, die nach unterschiedlichen Standards operieren, gestattet: ein erstes **TETRA** mobiles Terminal, **aufweisend ein PEI** (Periphere **Geräteschnittstelle**) und ein zweites Terminal, welches basierend auf Mobiltelefonstandards operiert, mit:
• einem Integrations- und Schnittstellenelement, welches geeignet ist, um verbunden zu werden mit dem oder zu integrieren das erste **TETRA** mobile Terminal; und
• einem Applikationssubstrat, welches einen analogen Audiostrom und Datenstrom, der von dem **ersten TETRA** mobilen Terminal kommt, in analoge Ströme dekodiert, welche in der Umgebung **des zweiten Terminals** verfügbar sind,
wobei das Integrations- und Schnittstellenelement aufweist:
• ein System zum Verbinden des PEI von dem ersten TETRA Terminal **mit dem zweiten Terminal über eine serielle Verbindung, wobei alle** AT Steuerungen, die zur Nutzung der Dienste notwendig sind, **verfügbar gemacht werden;**
• ein System zum Verbinden der Sprachschnittstelle des ersten TETRA Terminals, welches das Audio-Sprach-Signal verarbeitet, welches durch das Mikrophon und durch die Lautsprecher des ersten TETRA Terminals produziert wurde, **mit dem zweiten Terminal durch eine serielle Verbindung,** wobei das Ausgangs-Audiosignal digitalisiert wird und durch einen Multiplexer (MUX) mit möglichen Steuerungen oder durch einen Mikrocontroller verarbeiteten Daten vervielfacht wird, und wobei ein **einziger** Einlass-Datenstrom de-vervielfacht (DEMUX) wird, um zwei Ströme zu erzielen: einen Datenstrom und einen Audiostrom;
• ein System zum Bearbeiten von Steuerungen zum Aktivieren von Diensten durch eine Firmware, die in dem Integrations- und Schnittstellenelement implementiert ist, übersetzend die Anfrage durch eine Applikation von dritten Parteien in den zugehörigen Steuerungen zum Kommunizieren mit dem Integrations- und Schnittstellenelement durch ein Multiplexen und, in der umgekehrten Richtung, ein Demultiplexen;
• eine oder mehrere Schnittstellen vom drahtlosen und/oder drahtgebundenen digitalen Verbindungssystem in Richtung der **zweiten** Mobilfunkeinrichtung, **die die serielle Verbindung erreicht.**

2. Die Verbindungseinrichtung nach Anspruch 1, wobei das Applikationssubstrat eine oder mehrere Applikationen in der Betriebssystemumgebung des zweiten Terminals aufweist, welches basierend auf Mobiltelefonstandards (Android®/Windows®/iOS®/Mac®) operiert, um die Sprach- und Datendienste des ersten professionellen mobilen Terminals in solch einer Umgebung nutzbar zu machen.

3. Die Verbindungseinrichtung nach Anspruch 1, wobei die Einrichtung mit einem existierenden professionellen mobilen Terminal verbunden wird, welches nach dem TETRA Standard arbeitet.

4. Die Verbindungseinrichtung nach Anspruch 1, wobei die Einrichtung ein professionelles mobiles Terminal integriert, welches nach dem TETRA Standard (TETRA Hauptplatine) arbeitet.

5. Die Verbindungseinrichtung nach Anspruch 2 und nach einem der Ansprüche 3 oder 4, wobei das Applikationssubstrat die verschiedenen in der TETRA Plattform bereitgestellten Funktionen implementiert und zu anderen Applikationen spezifische Schnittstellen freilegt für:
• Herstellen/Empfangen von TETRA individuellen und Gruppen-Sprachanrufen;
• Verwenden der erweiterten zusätzlichen Dienste von TETRA (CLIP, CLIR, Priorität; Später Eingang, etc.) Netzwerken;
• Senden/Empfangen erweiterter TETRA Nachrichten (Status Nachrichten, SDS, Text Nachrichten);
• Handhaben erweiterter TETRA Funktionen (Call Out, Prioritäts-Scannen, Broadcast-Rufe, Notrufe, Funkortung via GPS, Flottenmanagement, Umgebungs-Abhören, etc); und
• Handhaben von TETRA (über-die-Luft Programmierung, Authentifizierung, Verschlüsselung) Sicherheitsfunktionen.

## Revendications

1. Dispositif de connexion permettant le passage bidirectionnel d'un flux audio et d'un flux de données entre deux systèmes de communication fonctionnant selon des normes différentes : un premier terminal mobile TETRA comportant une PEI (interface d'équipement périphérique) et un second terminal fonctionnant selon des normes de téléphone cellulaire, comprenant :
• un élément d'intégration et d'interface, apte à être connecté à ou à intégrer le premier terminal mobile TETRA ; et
• un substrat d'application décodant un flux audio analogique et un flux de données provenant dudit premier terminal mobile TETRA en flux analogues disponibles dans l'environnement dudit second terminal,
dans lequel ledit élément d'intégration et d'interface comprend :
• un système pour connecter la PEI du premier terminal TETRA audit second terminal par une connexion série, moyennant quoi toutes les commandes AT nécessaires pour utiliser les services sont mises à disposition ;
• un système pour connecter l'interface vocale du premier terminal TETRA, traiter le signal audio-vocal produit par le microphone et par les haut-parleurs du premier terminal TETRA, audit second terminal par une connexion série, dans lequel le signal audio de sortie est numérisé et est multiplié par un multiplexeur (MUX) avec d'éventuelles commandes ou données traitées par un microcontrôleur, et dans lequel un flux de données d'entrée unique est démultiplié (DEMUX) de façon à obtenir deux flux : un flux de données et un flux audio ;
• un système pour traiter des commandes pour activer des services par un micrologiciel implémenté dans ledit élément d'intégration et d'interface, traduire la demande par une application de tiers dans les commandes liées pour communiquer avec l'élément d'intégration et d'interface par un multiplexage et, dans le trajet opposé, un démultiplexage ;
• une ou plusieurs interfaces d'un système de connexion numérique sans fil et/ou filaire vers ledit second dispositif cellulaire parvenant à ladite connexion série.

2. Dispositif de connexion selon la revendication 1, dans lequel le substrat d'application comprend une ou plusieurs applications dans l'environnement opérationnel du second terminal fonctionnant selon des normes de téléphone cellulaire (Android^{®}/Windows^{®}/iOS^{®}/MAC^{®}) pour rendre utiles dans un tel environnement les services vocaux et de données du premier terminal mobile professionnel.

3. Dispositif de connexion selon la revendication 1, dans lequel le dispositif est connecté à un terminal mobile professionnel existant fonctionnant selon la norme TETRA.

4. Dispositif de connexion selon la revendication 1, dans lequel le dispositif incorpore un terminal mobile professionnel fonctionnant selon la norme TETRA (carte mère TETRA).

5. Dispositif de connexion selon la revendication 2 et selon l'une des revendications 3 ou 4, dans lequel ledit substrat d'application implémente les diverses fonctions fournies dans une plateforme TETRA et il expose à des applications externes des interfaces spécifiques pour :
• établir /recevoir des appels vocaux individuels et groupés ;
• utiliser les services supplémentaires avancés de réseaux TETRA (CLIP, CLIR, Priorité, Dernière entrée, etc.) ;
• envoyer/recevoir des messages TETRA avancés (messages de statut, SDS, messages textes)
• gérer des fonctions TETRA avancées (service continu, balayage prioritaire, communications de radiodiffusion, appels d'urgence, radiolocalisation par GPS, gestion de flotte, écoute d'ambiance, etc.) ; et
• gérer des fonctions de sécurité TETRA (programmation par liaison radio, authentification, chiffrement).
